# EUROPEAN PATENT APPLICATION

(11) **EP 3 312 680 A2**
(43) Date of publication of application: **25.04.2018**
(21) Application number: 17192594.4
(22) Date of filing: 22.09.2017
(51) Int. Cl.: G03G 15/08, G03G 21/16, G03G 21/18

(54) **IC CHIP FOR A RECORDING AGENT CARTRIDGE, MANAGEMENT SYSTEM AND PACKAGING BOX**

(30) Priority: 18.10.2016 US 201615296104
(71) Applicant: Toshiba TEC Kabushiki Kaisha, Tokyo 141-8562 (JP); KABUSHIKI KAISHA TOSHIBA, Minato-ku Tokyo 105-8001 (JP)
(72) Inventor: Takano, Akira, Tokyo, 141-8562 (JP)
(74) Representative: Hoffmann Eitle

(57) **Abstract**

In accordance with an embodiment, an IC chip for a recording agent cartridge comprises a contact interface, a non-contact interface, a memory and a switching section. The contact interface communicates with a first external device in a wired manner. The non-contact interface communicates with a second external device in a wireless manner. The memory stores identification information. The switching section switches between a first mode capable of accessing the memory via wired communication and a second mode capable of accessing the memory via wireless communication. The switching section switches between the first mode and the second mode depending on whether access information is acquired via the contact interface or the non-contact interface.

## Description

### FIELD

Embodiments described herein relate generally to an IC chip for a recording agent cartridge, a management system and a packaging box.

### BACKGROUND

A cartridge which replenishes toner to a developing device is interchangeably mounted in an image forming apparatus. An integrated circuit (IC) chip in which inherent identification information of the cartridge is stored is incorporated in to the cartridge. The image forming apparatus reads the identification information from the mounted cartridge, and sends the identification information and information of residual quantity of toner in the cartridge to a management device. In this way, an image forming apparatus maker can better understand a use state of the toner cartridge of the image forming apparatus on the basis of the information sent to the management device.

Furthermore, the image forming apparatus maker can correctly understand not only the use state of the toner which is being used at the present time but also time when a toner cartridge is sent to a user or device operator next time by being apprised of the inventory number of the toner cartridges. For that reason, accuracy is increased if a user knows identification information of toner cartridges which are being maintained in inventory in addition to the inherent identification information of the toner which is being used at the present time, and thus it is necessary to associate a user name with the identification information of all the toner cartridges sent to the user/operator. However, in order to read the identification information of a cartridge, it is necessary to mount the cartridge in the image forming apparatus and record individual identification information matching with IC chip data of the toner cartridge in a packaging box, and there is a case in which efficiency is poor.

### SUMMARY OF THE INVENTION

It is an object of the invention to overcome prior art problem(s). According to a first aspect, it is provided an IC chip for a recording agent cartridge, comprising:
a contact interface configured to communicate with a first external device in a wired manner;
a non-contact interface configured to communicate with a second external device in a wireless manner;
a memory configured to store identification information; and
a switching section configured to switch between a first mode capable of accessing the memory via wired communication and a second mode capable of accessing the memory via wireless communication, wherein
the switching section switches between the first mode and the second mode depending on whether access information is acquired via the contact interface or the non-contact interface.

According to a second aspect, it is provided A management system, comprising: a first external device; a second external device different from the first external device; and
an IC chip for a recording agent cartridge comprising a contact interface configured to communicate with the first external device in a wired manner; a non-contact interface configured to communicate with the second external device in a wireless manner; a memory configured to store identification information; and a switching section configured to switch between a first mode capable of accessing the memory via wired communication and a second mode capable of accessing the memory via wireless communication, wherein the switching section switches between the first mode and the second mode depending on whether access information is acquired via the contact interface or the non-contact interface.

According to a third aspect, it is provided a packaging box for packaging a recording agent cartridge comprising an IC chip for a recording agent cartridge which comprises a contact interface configured to communicate with a first external device in a wired manner; a non-contact interface configured to communicate with a second external device in a wireless manner; a memory configured to store identification information; and a switching section configured to switch between a first mode capable of accessing the memory via wired communication and a second mode capable of accessing the memory via wireless communication, wherein the switching section switches between the first mode and the second mode depending on whether access information is acquired via the contact interface or the non-contact interface, wherein a mark is arranged at a position of the outside opposite to the non-contact interface.

Further aspects are defined by the independent claims; advantageous aspects are provided by the dependent claims.

### DESCRIPTION OF THE DRAWINGS

Fig. 1 is a diagram illustrating an example of the configuration of a management system 1 according to an embodiment;
Fig. 2 is an external view illustrating an example of the entire configuration of an image forming apparatus 100 according to the present embodiment;
Fig. 3 is a diagram illustrating the configurations of main portions of the image forming apparatus 100 according to the present embodiment;
Fig. 4 is a block diagram illustrating the device configuration of a control system for controlling an image forming operation of the image forming apparatus 100 according to the present embodiment;
Fig. 5 is a block diagram illustrating the configuration of an IC chip 4 according to the present embodiment;
Fig. 6 is a view illustrating an example of information stored in a second memory 433 according to the present embodiment;
Fig. 7 is a view illustrating a packaging box 50 for packaging a cartridge 2 according to the present embodiment; and
Fig. 8 is a view illustrating the flow of a processing of the management system 1 according to the present embodiment.

### DETAILED DESCRIPTION

In accordance with an embodiment, an IC chip for a recording agent cartridge comprises a contact interface, a non-contact interface, a memory and a switching section. The contact interface communicates with a first external device in a wired manner. The non-contact interface communicates with a second external device in a wireless manner. The memory stores identification information. The switching section switches between a first mode capable of accessing the memory by the wired communication and a second mode capable of accessing the memory by the wireless communication. The switching section switches between the first mode and the second mode depending on whether access information is acquired via the contact interface or the non-contact interface.

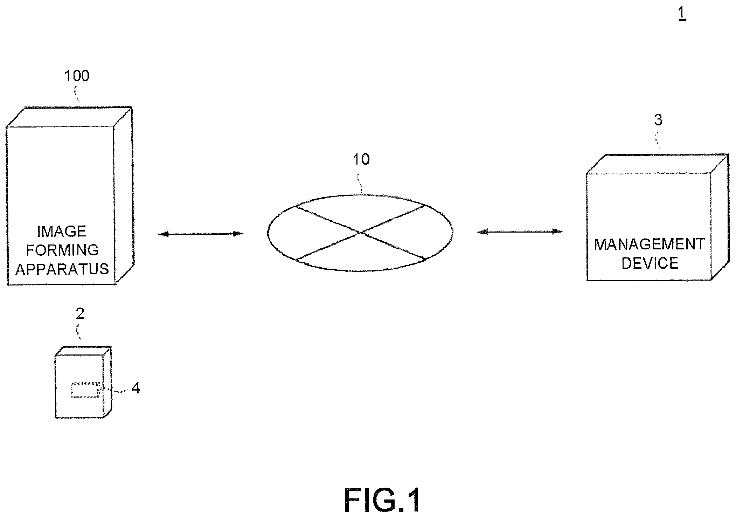

Hereinafter, a management system including an IC chip for a recording agent cartridge according to an embodiment is described with reference to the accompanying drawings. Fig. 1 is a diagram illustrating an example of the configuration of a management system 1 according to the embodiment.

The management system 1 includes an image forming apparatus 100, a recording agent cartridge 2 and a management device 3.

The image forming apparatus 100 is an MFP (Multi-Function Printer) capable of forming a toner image on a sheet. The image forming apparatus 100 and the management device 3 send and receive information via a communication network 10. The communication network 10 may be a transmission path of wireless communication, or a combination of the transmission path of the wireless communication and a transmission path of wired communication. The communication network 10 may be a mobile communication network such as a mobile telephone network, a wireless packet communication network, an Internet and a private line or their combination.

The image forming apparatus 100 reads out identification information from an IC chip 4 of the recording agent cartridge 2 installed in the image forming apparatus 100. The image forming apparatus 100 sends the read identification information and information indicating residual quantity of toner in the recording agent cartridge 2 to the management device 3 via the communication network 10.

The identification information of the recording agent cartridge 2 and identification information of the image forming apparatus which uses the recording agent cartridge 2 are associated in the management device 3. A service technician compares information from the image forming apparatus 100 and the information associated in the management device 3. In this way, the service technician can grasp inventory of recording agent cartridges sent to the image forming apparatus, whether the recording agent from the recording agent cartridge is used completely and a timing at which next sending is required.

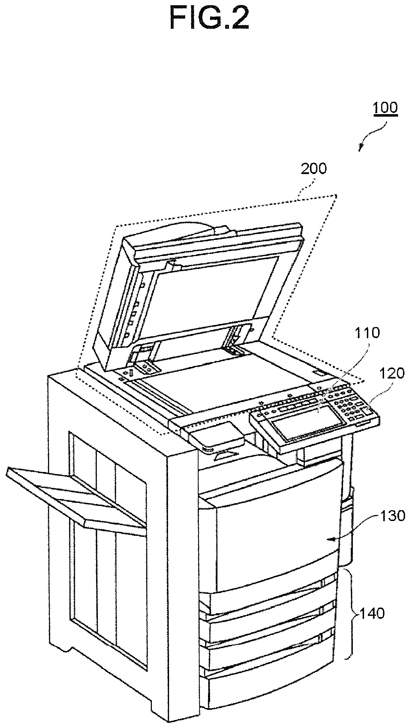

Fig. 2 is an external view illustrating an example of the entire configuration of the image forming apparatus 100 according to the present embodiment. The image forming apparatus 100 includes a display 110, a control panel 120, a printer section 130, a sheet housing section 140 and an image reading section 200. The printer section 130 of the image forming apparatus 100 may be a device for fixing a toner image or an inkjet type device.

The image forming apparatus 100 forms an image on a sheet with a recording agent such as toner. The sheet is, for example, a paper or a label paper. The sheet may be an optional sheet as long as the image forming apparatus 100 can form an image on the surface of the sheet.

The display 110 is an image display device such as a liquid crystal display, an organic EL (Electro Luminescence) display and the like. The display 110 displays various kinds of information relating to the image forming apparatus 100.

The control panel 120 includes a plurality of buttons. The control panel 120 receives operations of a user. The control panel 120 outputs a signal corresponding to an operation carried out by the user to a controller of the image forming apparatus 100. The display 110 and the control panel 120 may be integrated into a single touch panel.

The printer section 130 forms an image on a sheet on the basis of image information generated by the image reading section 200 or image information received via a communication path. The printer section 130 forms an image through, for example, the following processing. An image forming section of the printer section 130 forms an electrostatic latent image on a photoconductive drum on the basis of the image information. The image forming section of the printer section 130 enables a recording agent to adhere to the electrostatic latent image to form a visible image. As a concrete example of the recording agent, toner is exemplified. A transfer section of the printer section 130 transfers the visible image on a sheet. A fixing section of the printer section 130 heats and pressures the sheet to fix the visible image on the sheet.

Further, the sheet on which the image is formed may be a sheet housed in the sheet housing section 140 or a manually fed sheet. The sheet housing section 140 houses the sheet used for image formation by the printer section 130.

The image reading section 200 reads the image information of a read object as intensity of light. The image reading section 200 records the read image information. The recorded image information may be sent to another information processing apparatus via a network. The recorded image information may be used for the image formation on the sheet through the printer section 130.

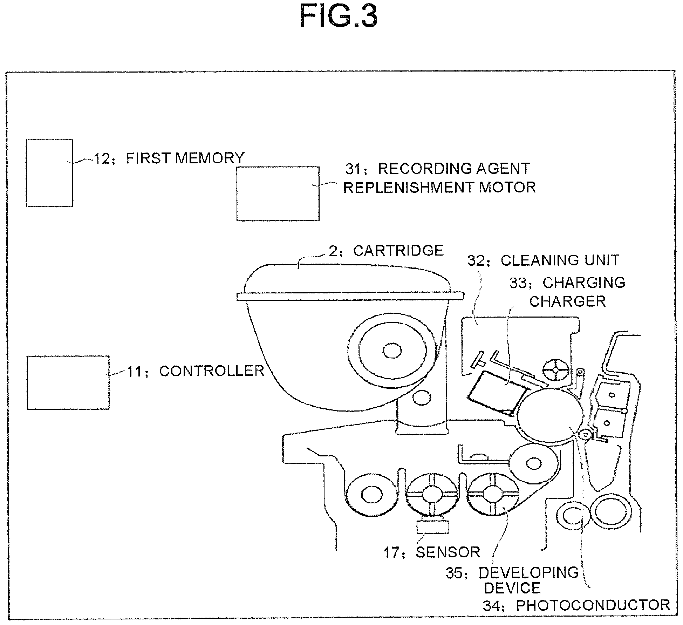

Next, with reference to Fig. 3, the configurations of main portions of the image forming apparatus 100 are described. Fig. 3 is a diagram illustrating the configurations of the main portions of the image forming apparatus 100. The main portions of the image forming apparatus 100 include a controller 11, a first memory 12, a sensor 17, a recording agent cartridge (hereinafter, referred to as a "cartridge") 2, a recording agent replenishment motor 31, a cleaning unit 32, a charging charger 33, a photoconductor 34 and a developing device 35.

The controller 11 collectively controls operations of the image forming apparatus 100.

The first memory 12 which is constituted by a nonvolatile memory stores information required for control of an image forming operation.

The sensor 17 detects concentration of the recording agent left in the developing device 35 of the image forming apparatus 100.

The cartridge 2 which is constituted detachably with respect to the image forming apparatus 100 is filled with the recording agent.

The recording agent replenishment motor 31 replenishes the recording agent in the cartridge 2.

The cleaning unit 32 removes the recording agent adhering to the surface of the photoconductor 34.

The charging charger 33 charges the surface of the photoconductor 34. The photoconductor 34 has a surface on which the image is formed with the recording agent.

The developing device 35 can store the recording agent, and supplies the recording agent to the photoconductor 34 through a developing roller.

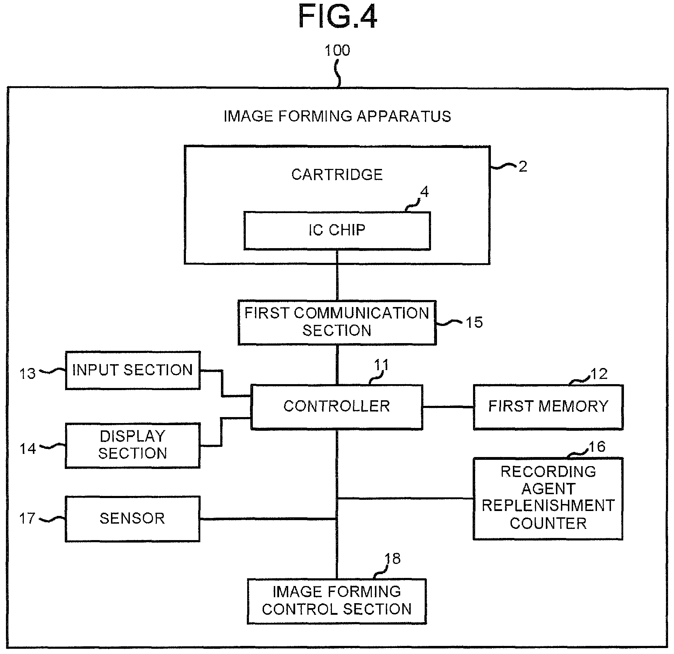

Next, with reference to Fig. 4, the device configuration of a control system for controlling the image forming operation of the image forming apparatus 100 is described. Fig. 4 is a block diagram illustrating the device configuration of the control system for controlling the image forming operation of the image forming apparatus 100.

An input section 13 which is equivalent to the control panel 120 receives the operation of the user. A display section 14 which is equivalent to the display 110 displays various kinds of information relating to the image forming apparatus 100.

A first communication section 15 carries out information communication with the cartridge 2. A recording agent replenishment counter 16 counts a replenishment amount of the recording agent (toner or ink) by counting operations of the recording agent replenishment motor for rotating a screw arranged in the cartridge 2. The replenishment amount can indirectly represent times the image formation is carried out and the residual quantity of the toner in the cartridge 2. The sensor 17 detects the concentration of the recording agent left in the developing device 35 of the image forming apparatus 100.

The cartridge 2 includes the IC chip 4. The cartridge 2 is a genuine cartridge.

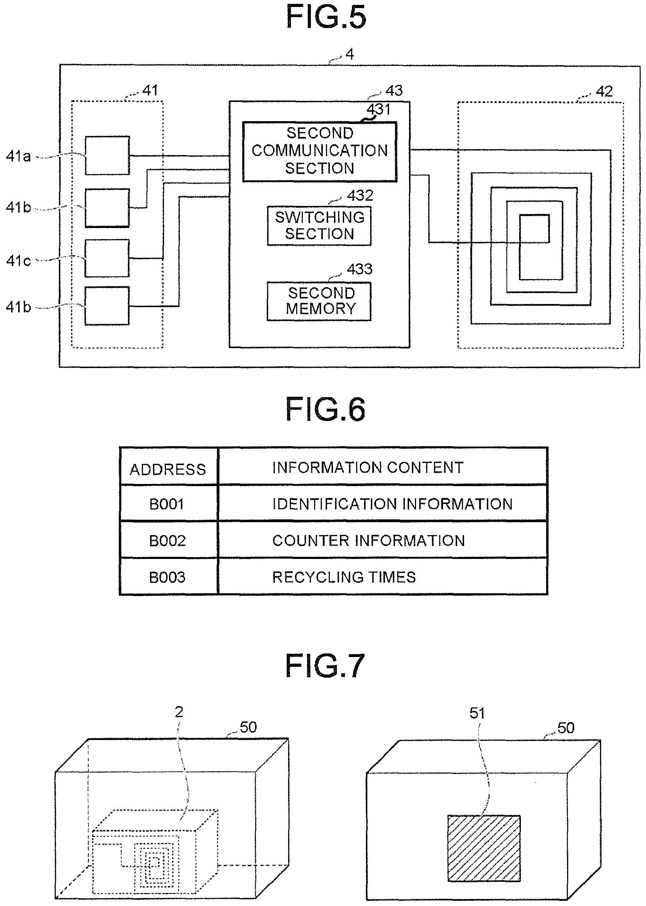

With reference to Fig. 5, the configuration of the IC chip 4 is described. Fig. 5 is a block diagram illustrating the configuration of the IC chip 4.

The IC chip 4 includes a contact interface 41, a non-contact interface 42 and a controller 43. The controller 43 includes a second communication section 431, a switching section 432 and a second memory 433.

The contact interface 41 communicates with a first external device serving as the image forming apparatus 100 in a wired manner. The contact interface 41 is electrically connected with the first communication section 15 if the cartridge 2 is mounted in the image forming apparatus 100. For example, the contact interface 41 includes terminals 41a∼41d capable of contacting with the first communication section 15.

The non-contact interface 42 communicates with a second external device different from the image forming apparatus 100 at close range in a wireless manner. For example, the wireless communication refers to a NFC (Near Field Communication) . Thus, the service technician can acquire information in the second memory 433 by closing the second external device to the non-contact interface 42. For example, the non-contact interface 42 is an antenna coil. For example, the second external device may be an optional device as long as it includes a reader or a writer communicable with the second communication section 431 via the non-contact interface 42.

The second communication section 431 carries out the information communication with the first external device or the second external device. The communication system between the first communication section 15 of the first external device and the second communication section 431 is a first communication system for communication via the contact interface 41. The communication system between the second external device and the second communication section 431 is a second communication system for communication via the non-contact interface 42. The second communication section 431 acquires access information from the first external device via the contact interface 41 to establish the communication with the first external device by the first communication system. The second communication section 431 acquires access information from the second external device via the non-contact interface 42 to establish the communication with the second external device by the second communication system.

The switching section 432 switches a first mode capable of accessing the second memory 433 by the first communication system and a second mode capable of accessing the second memory 433 by the second communication system. In other words, the first mode accesses the second memory 433 from the first external device via the contact interface 41. The second mode accesses the second memory 433 from the second external device via the non-contact interface 42.

The switching section 432 switches the first mode and the second mode depending on the access information acquired via the contact interface 41 or the non-contact interface 42.

For example, in the case of acquiring the access information via the contact interface 41, the switching section 432 switches to the first mode. On the other hand, in the case of acquiring the access information via the non-contact interface 42, the switching section 432 switches to the second mode.

In the second memory 433, inherent identification information and information of use history of the cartridge 2 are stored.

Fig. 6 is a view illustrating an example of the information stored in the second memory 433. For example, the information in the second memory 433 is stored respectively in addresses of A001∼A003.

In the address A001, the identification information for identifying the cartridge 2 is stored. The identification information stored in the address A001 is information read into the first external device in the first mode. Further, the identification information stored in the address A001 is information read into the second external device in the second mode.

In the address A002, a count value of the recording agent replenishment counter 16 is stored. The count value is information which indicates the residual quantity of the toner in the cartridge 2 and is written into the image forming apparatus 100 in the first mode. In the address A003, information of recycling times is stored. The recycling times is information written into the image forming apparatus 100 in the first mode.

A memory area that can be accessed by the second communication system, that is, in a non-contact manner may be limited to the address A001. In other words, the memory area that can be accessed by the second communication system, that is, in a non-contact manner may be limited to a part of a memory area that can be accessed in a contact manner.

Fig. 7 is a view illustrating a packaging box 50 for packaging the cartridge 2 according to the present embodiment. In a case in which the cartridge 2 is packaged in the packaging box 50, the non-contact interface 42 is arranged by approaching a side of the packaging box 50. For example, the cartridge 2 is arranged in such a manner that the non-contact interface 42 is arranged in parallel with a surface of the outside of the packaging box 50. A mark 51 is arranged at a predetermined position on the surface of the outside of the packaging box 50 to be accessed from the outside by using, for example, a reader or a smartphone serving as the second external device. The predetermined position is opposite to the non-contact interface 42. Thus, the service technician can acquire the identification information of the cartridge 2 by holding the second external device over the position at which the mark 51 is arranged.

Thus, the service technician can read the identification information of the cartridge 2 by using the second external device without taking out the cartridge 2 from the packaging box.

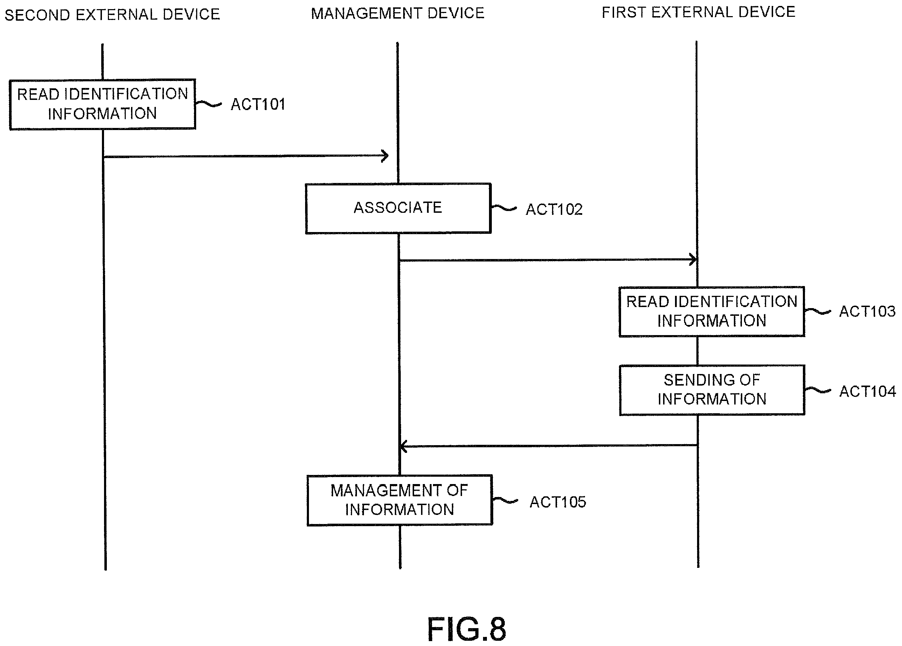

Fig. 8 is a view illustrating the flow of a processing of the management system 1 according to the present embodiment.

If a shipping destination (first external device) of a cartridge 2 is determined, the service technician reads the identification information of the cartridge 2 by using the second external device. For example, the service technician reads the identification information of the cartridge 2 in the packaging box 50 by closing the second external device to the packaging box 50 (ACT 101). Then, the service technician associates identification information of the shipping destination with the read identification information of the cartridge 2 in the management device 3 (ACT 102).

The service technician or the user mounts the cartridge 2 in the image forming apparatus 100 serving as the first external device at the shipping destination.

The image forming apparatus 100 reads the identification information of the mounted cartridge 2 (ACT 103). The image forming apparatus 100 sends the identification information and the count value (hereinafter, referred to as "counter information") of the recording agent replenishment counter 16 to the management device 3 (ACT 104). The management device 3 stores the information sent from the image forming apparatus 100 for each cartridge 2. The service technician confirms the information stored in the management device 3. Then, the service technician determines whether or not the cartridge 2 with the identification information sent from the image forming apparatus 100 is a cartridge which is shipped for the image forming apparatus 100, and can correctly grasp the number of the consumed toner cartridges and the number of the remaining toner cartridges as inventory within the toner cartridges shipped for the image forming apparatus 100. For example, the cartridge 2 with the identification information sent from the image forming apparatus 100 is determined as the cartridge which is shipped for the image forming apparatus 100. In this case, the service technician can grasp exchange time of the cartridge 2 on the basis of a use frequency of the image forming apparatus 100. Further, the service technician can determine whether or not the cartridge 2 is quickly exchanged on the basis of the counter information sent from the image forming apparatus 100. Furthermore, the service technician can correctly know time when next sending may be carried out from the inventory number of the toner cartridges. On the other hand, the cartridge 2 with the identification information sent from the image forming apparatus 100 may be not the cartridge which is shipped for the image forming apparatus 100. In this case, the service technician can know that there is a possibility that the cartridges for different image forming apparatuses in the same office are misappropriated and that there is a possibility that the cartridges of different makers are used in the image forming apparatus 100.

According to at least one embodiment described above, the non-contact interface 42 for communicating with the second external device in a wireless manner is included in the cartridge 2. In this way, the identification information of the cartridge 2 can be easily read without mounting the cartridge 2 in the image forming apparatus 100.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

## Claims

1. An IC chip for a recording agent cartridge, comprising:
a contact interface configured to communicate with a first external device in a wired manner;
a non-contact interface configured to communicate with a second external device in a wireless manner;
a memory configured to store identification information; and
a switching section configured to switch between a first mode capable of accessing the memory via wired communication and a second mode capable of accessing the memory via wireless communication, wherein
the switching section switches between the first mode and the second mode depending on whether access information is acquired via the contact interface or the non-contact interface.

2. The IC chip for the recording agent cartridge according to claim 1, wherein
the switching section acquires the access information from the contact interface when the recording agent cartridge comprising the IC chip for recording agent cartridge is mounted in the first external device.

3. The IC chip for the recording agent cartridge according to claim 1 or 2, wherein
a part of an area of the memory which can be accessed in the first mode is set in an area of the memory which can be accessed in the second mode.

4. The IC chip for the recording agent cartridge according to any of claims 1 to 3, wherein
the contact interface is a terminal capable of contacting with the first external device.

5. The IC chip for the recording agent cartridge according to any of claims 1 to 4, wherein
the non-contact interface is an antenna coil.

6. The IC chip for the recording agent cartridge according to any of claims 1 to 5, wherein
the non-contact interface facilitates near field communication.

7. A management system, comprising:
a first external device;
a second external device different from the first external device; and
an IC chip for a recording agent cartridge comprising a contact interface configured to communicate with the first external device in a wired manner; a non-contact interface configured to communicate with the second external device in a wireless manner; a memory configured to store identification information; and a switching section configured to switch between a first mode capable of accessing the memory via wired communication and a second mode capable of accessing the memory via wireless communication, wherein the switching section switches between the first mode and the second mode depending on whether access information is acquired via the contact interface or the non-contact interface.

8. The management system according to claim 7, wherein the first external device is an image forming apparatus.

9. The management system according to claim 7 or 8, wherein the first external device reads out the identification information via the contact interface when the recording agent cartridge comprising the IC chip for the recording agent cartridge is mounted.

10. The management system according to any of claims 7 to 9, wherein
the second external device reads out the identification information by communicating with the non-contact interface at close range in a wireless manner.

11. The management system according to any of claims 7 to 10, wherein
the second external device reads out the identification information by communicating with the non-contact interface using near field communication technology.

12. A packaging box for packaging a recording agent cartridge comprising an IC chip for a recording agent cartridge which comprises a contact interface configured to communicate with a first external device in a wired manner; a non-contact interface configured to communicate with a second external device in a wireless manner; a memory configured to store identification information; and a switching section configured to switch between a first mode capable of accessing the memory via wired communication and a second mode capable of accessing the memory via wireless communication, wherein the switching section switches between the first mode and the second mode depending on whether access information is acquired via the contact interface or the non-contact interface, wherein
a mark is arranged at a position of the outside opposite to the non-contact interface.

13. The packaging box according to claim 12, wherein
the switching section acquires the access information from the contact interface when the recording agent cartridge comprising the IC chip for recording agent cartridge is mounted in the first external device.

14. The packaging box according to claim 12 or 13, wherein
a part of an area of the memory which can be accessed in the first mode is set in an area of the memory which can be accessed in the second mode.

15. The packaging box according to any of claims 12 to 14, wherein the contact interface includes at least one amongst a terminal capable of contacting with the first external device, an antenna coil, and non-contact interface capable of facilitating near field communication.
